# EUROPÄISCHE PATENTSCHRIFT

(11) **EP 3 338 252 B1**
(45) Veröffentlichungstag und Bekanntmachung des Hinweises auf die Patenterteilung: **11.10.2023**
(21) Anmeldenummer: 16753837.0
(22) Anmeldetag: 28.07.2016
(51) Int. Cl.: G07C 5/00, G08G 1/16, B60W 30/095, B60W 60/00, G08G 1/0962

(54) **VORRICHTUNGEN, VERFAHREN UND COMPUTERPROGRAMM ZUM BEREITSTELLEN VON INFORMATION ÜBER EINE VORAUSSICHTLICHE FAHRINTENTION**
DEVICES, METHOD AND COMPUTER PROGRAM FOR PROVIDING INFORMATION ABOUT AN EXPECTED DRIVING INTENTION
DISPOSITIFS, PROCÉDÉ ET LOGICIEL POUR PRODUIRE DES INFORMATIONS SUR UNE INTENTION DE CONDUITE PROBABLE

(30) Priorität: 20.08.2015 DE 102015215929
(43) Veröffentlichungstag der Anmeldung: 27.06.2018
(73) Patentinhaber: Volkswagen Aktiengesellschaft, 38440 Wolfsburg (DE)
(72) Erfinder: BUBURUZAN, Teodor, 38118 Braunschweig (DE); KLEINAU, Sandra, 38531 Rötgesbüttel (DE); RECH, Bernd, 38556 Bokensdorf (DE); ENGEL, Monique, 38110 Braunschweig (DE); LEHMANN, Bernd, 38444 Wolfsburg (DE); GLÄSER, Stefan, 38104 Braunschweig (DE); GÜNTHER, Hendrik-Jörn, 30173 Hannover (DE)
(86) Internationale Anmeldenummer: PCT/EP2016/068053
(87) Internationale Veröffentlichungsnummer: WO 2017/029096

(56) Entgegenhaltungen:
- EP-A2- 2 881 829
- DE-A1-102008 042 565
- DE-A1-102011 113 019
- DE-A1-102012 218 935
- DE-A1-102013 105 103

## Beschreibung

Ausführungsbeispiele betreffen eine Vorrichtungen und Verfahren für Fahrzeuge zum Bereitstellen von Informationen über eine voraussichtliche Fahrintention.

Fahrzeug-zu-Fahrzeug-Kommunikation (auch engl. Car2Car, C2C, oder Vehicle2Vehicle, V2V) und Fahrzeug-zu-Infrastruktur-Kommunikation (auch engl. Car2lnfrastructure, C2I oder Vehicle2Roadside, V2R) sind ein Brennpunkt automobiler Forschung im 21. Jahrhundert. Die Kommunikation zwischen Fahrzeugen oder zwischen Fahrzeugen oder Verkehrsinfrastruktur ermöglicht eine Vielzahl neuer Möglichkeiten, beispielsweise eine Koordination von Fahrzeugen untereinander oder eine Kommunikation von Fahrzeugen mit der Verkehrsinfrastruktur, beispielsweise um den Fahrzeugen Stauwarnungen bereitzustellen. Dabei besitzen Fahrzeuge, die zur C2C oder C2I (auch zusammengefasst unter Fahrzeug-zu-X-Kommunikation, engl. Car2X, C2X oder Vehicle2X, V2X) eine Sende- und Empfangseinheit um mit anderen Fahrzeugen kommunizieren zu können, beispielsweise über direkte Funkverbindungen oder Mobilfunknetzwerke. Die Kommunikation kann dabei beispielsweise zwischen Fahrzeugen oder zwischen Fahrzeugen und Verkehrsinfrastruktur innerhalb eines Radius von wenigen hundert Metern begrenzt sein. Die Kommunikation zwischen Fahrzeugen über C2C oder C2I kann dabei verschlüsselt ablaufen, und sie kann über Zertifikate gesichert sein, beispielsweise über Langzeitzertifikate (auch engl. Long Term Certificates, LTC) oder nur begrenzt zeitlich gültige Pseudonymzertifikate (auch engl. Pseudonym Certificates, PC).

Das Fahren eines Fahrzeugs im Straßenverkehr ist von vielen Faktoren abhängig - beispielsweise von der Straßenführung, von Ampeln, Hindernissen aber vor allem auch von anderen Verkehrsteilnehmern, welche die gleiche, oft mehrspurige Straße befahren. Dabei kommt es häufig zu Situationen, in denen es für einen Fahrer nicht möglich ist, alle Verkehrsbewegungen anderer Fahrzeuge zu berücksichtigen, was unter Rücksichtnahme der anderen Verkehrsbeteiligungen nicht zwangsläufig zu Unfällen führen muss, aber oft brenzlige Verkehrssituationen, Verzögerungen oder eben auch Unfälle zur Folge haben kann.

Die Patentanmeldung DE 10 2012 218935 A1 offenbart einen Autobahneinfädelassistenten und eine Autobahneinfädelsteuerung. Dabei werden zwischen zwei Fahrzeugen, einem Trägerfahrzeug und einem entfernten Fahrzeug, Nachrichten ausgetauscht über die Position und Bewegung der beiden Fahrzeuge. Soll das Trägerfahrzeug einfädeln, so erkennt das Trägerfahrzeug, dass es sich auf einer Durchgangsstraße befindet und bestimmt basierend auf einer voraussichtlichen Vorwärtsgeometrie der beiden Fahrzeuge, ob sich die beiden Fahrzeuge an einem voraussichtlichen Einfädelpunkt kreuzen. Falls sich die beiden Fahrzeuge kreuzen, so sendet das Trägerfahrzeug eine Einfädelabsicht an das entfernte Fahrzeug, die anzeigt, ob das Trägerfahrzeug vor oder hinter dem entfernten Fahrzeug einzufädeln beabsichtigt oder dass das Trägerfahrzeug das entfernte Fahrzeug auffordert, die Fahrspur zu wechseln, um das Einfädeln zu ermöglichen.

Die Patentanmeldung DE 10 2013 105 103 A1 bezieht sich auf ein Verfahren zum Betrieb eines Eigen-Fahrzeugs, das auf einer aktuellen Fahrspur entlang einer Straße, die in mehrere Fahrspuren unterteilt ist, fährt, wobei ein beabsichtigter Wechsel des Eigen-Fahrzeugs von der aktuellen Fahrspur auf eine weitere benachbarte Fahrspur der Straße durch Aktivieren eines Fahrtrichtungsanzeigers des Eigen-Fahrzeugs angekündigt wird. Zu diesem Zweck wird eine Trajektorie des Eigen-Fahrzeugs berechnet und mit einer Trajektorie zumindest eines anderen Fahrzeugs verglichen.

Es besteht daher der Bedarf, ein verbessertes Konzept bereitzustellen, um eine gegenseitige Rücksichtnahme von Fahrzeugen zu ermöglichen und eine Fahrsicherheit der beteiligten Fahrzeuge zu verbessern. Diesem Bedarf wird durch Vorrichtungen und Verfahren gemäß den unabhängigen Ansprüchen, sowie durch ein Computerprogramm Rechnung getragen.

Ausführungsbeispiele können dies beispielsweise durch ein Bestimmen einer voraussichtlichen Trajektorie erreichen. Eine Vorrichtung für ein Fahrzeug kann gemäß Ausführungsbeispielen ausgebildet sein, eine voraussichtliche Trajektorie zu berechnen, etwa basierend auf der Lenkrandstellung, Beschleunigung des Fahrzeugs und/oder externen Sensoren, oder etwa basierend auf einer Fahrplanung eines Fahrassistenzsystems oder Autopiloten. Diese Trajektorie kann beispielsweise eine Sequenz von Zeit-Orts-Punkten umfassen, anhand derer die Vorrichtung eine Fahrintention des Fahrzeugs berechnen kann. Diese Fahrintention, welche die voraussichtliche Trajektorie umfassen kann, kann die Vorrichtung nun beispielsweise an die anderen Fahrzeuge übertragen, zum Beispiel über Fahrzeug-zu-Fahrzeug-Kommunikation. Diese anderen Fahrzeuge können dann z.B. basierend auf der Fahrintention ihre eigenen geplanten Trajektorien anpassen, um Kollisionen zu vermeiden, oder können Warnungen oder Fahrhilfen einblenden, um dem Fahrer beim Fahren zu unterstützen.

Ausführungsbeispiele schaffen eine Vorrichtung für ein Fahrzeug. Die Vorrichtung umfasst ein Fahranalysemodul ausgebildet zum Bestimmen von Information über eine voraussichtliche Trajektorie des Fahrzeugs. Die Vorrichtung umfasst ferner ein Kontrollmodul ausgebildet zum Bestimmen von Information über eine voraussichtliche Fahrintention des Fahrzeugs basierend auf der Information über die voraussichtliche Trajektorie des Fahrzeugs. Die Vorrichtung umfasst ferner eine Schnittstelle ausgebildet zum Bereitstellen der Information über die voraussichtliche Fahrintention für ein oder mehrere fahrzeugexterne Entitäten. In Ausführungsbeispielen kann die Vorrichtung eine Weitergabe der Fahrintention an weitere Fahrzeuge ermöglichen, etwa um diesen zu ermöglichen, ihre eigene Trajektorie basierend auf den voraussichtlichen Trajektorien anzupassen, beispielsweise beim Einfädeln auf einer Auffahrt. Ferner könnte es Koordinationsstellen ermöglicht werden, kritische Fahrsituationen koordinativ zu entschärfen.

In einigen Ausführungsbeispielen kann das Fahrzeug eine automatische Distanzregelung umfassen. Das Fahrzeug kann ferner einen Autopiloten umfassen. Das Fahranalysemodul kann beispielsweise ausgebildet sein, die voraussichtliche Trajektorie basierend auf Fahrplanungsinformationen der automatischen Distanzregelung und/oder des Autopiloten zu bestimmen.

In manchen Ausführungsbeispielen umfasst die Information über die voraussichtliche Trajektorie eine Zeitspanne von 0 bis 10 Sekunden. Eine Weitergabe der Information über die voraussichtliche Trajektorie für eine geringe Zeitspanne kann eine Gesamtgenauigkeit der voraussichtlichen Trajektorie erhöhen und einen Berechnungsaufwand und Übertragungsaufwand reduzieren.

In einigen Ausführungsbeispielen entspricht die Schnittstelle einer Schnittstelle für Fahrzeug-zu-Fahrzeug-Kommunikation. Über eine Fahrzeug-zu-Fahrzeug-Schnittstelle können eine geringe Latenz oder beispielsweise lediglich Kommunikationspartner erreicht werden, für die die Information relevant ist, beispielsweise ohne zentrale Verwaltung potentieller Kommunikationspartner.

In zumindest einigen Ausführungsbeispielen entsprechen die fahrzeugexternen Entitäten weiteren Fahrzeugen. Die Information über die voraussichtliche Fahrintention kann es den weiteren Fahrzeugen ermöglichen, ihre eigene Trajektorie basierend auf den voraussichtlichen Trajektorien anzupassen, beispielsweise beim Einfädeln auf einer Auffahrt.

In einigen Ausführungsbeispielen umfasst die Information über die voraussichtliche Trajektorie Information über eine Mehrzahl von Zeit-Positions-Punkten. Das Kontrollmodul kann z.B. ausgebildet sein, die Zeit-Positions-Punkte zu extrapolieren, um die voraussichtliche Fahrintention zu bestimmen.

Optional kann das Fahranalysemodul ausgebildet sein, die Information über die voraussichtliche Trajektorie basierend auf zumindest einem Element der Gruppe von Information über einen Lenkwinkel, Information über eine Position des Fahrzeugs, Information über eine Geschwindigkeit des Fahrzeugs, Information über eine Beschleunigung des Fahrzeugs, Information über einen Fahrtrichtungsanzeiger, Information über einen Abstand anderer Fahrzeuge, Information über Fahrtrichtungsanzeiger anderer Fahrzeuge, Information über eine Lichtzeichenanlage, Information über ein automatisches Fahrkontrollsystem und Karteninformation zu bestimmen. Das Fahranalysemodul kann gemäß einigen Ausführungsbeispielen eine oder eine Kombination der Quellen nutzen, um die voraussichtliche Trajektorie des Fahrzeugs zu bestimmen oder zu verfeinern.

In einigen Ausführungsbeispielen ist das Fahranalysemodul ausgebildet, um die Zeitkomponenten und/oder die Positionskomponenten der Mehrzahl von Zeit-Positions-Punkten basierend auf einem variablen zeitlichen oder örtlichen Abstand zu bestimmen. Ein zeitlich oder örtlich variabler Abstand der Punkte kann beispielsweise eine höhere Genauigkeit der Informationen in kritischeren Situationen ermöglichen und es ermöglichen, ein übertragenes Datenvolumen in weniger kritischen Situationen zu reduzieren.

In einigen Ausführungsbeispielen ist das Fahranalysemodul ausgebildet, um die Zeitkomponenten und/oder die Positionskomponenten der Mehrzahl von Zeit-Positions-Punkten basierend auf einer Fahrdynamik des Fahrzeugs zu bestimmen. Ein zeitlicher oder örtlicher Abstand der Punkte basierend auf der Fahrdynamik kann eine höhere Genauigkeit der Informationen in kritischeren Fahrsituationen ermöglichen und es ermöglichen, ein übertragenes Datenvolumen in weniger kritischen Fahrsituationen zu reduzieren.

In zumindest manchen Ausführungsbeispielen können die Zeitkomponenten der Mehrzahl von Zeit-Positions-Punkten absoluten Zeitpunkten, Zeitpunkten relativ zu einem globalen Referenzzeitsystem und/oder Zeitpunkten relativ zu einem lokalen Referenzzeitsystem entsprechen. Die Nutzung globaler oder lokaler Referenzzeiten kann eine zeitlich präzisere Nutzung der Punkte durch die fahrzeugexternen Entitäten ermöglichen

In einigen Ausführungsbeispielen können die Positionskomponenten der Mehrzahl von Zeit-Positions-Punkten zumindest ein Element der Gruppe von absolute Positionspunkte, Positionspunkte relativ zu einer Verkehrsinfrastruktur und Auswahl einer geometrischen Komponente der Verkehrsinfrastruktur umfassen. Die Verankerung der Positionskomponenten in einem Referenzsystem kann eine geographisch präzisere Nutzung der Punkte durch die fahrzeugexternen Entitäten ermöglichen

In manchen Ausführungsbeispielen umfasst die Information über die voraussichtliche Fahrintention die Information über die voraussichtliche Trajektorie. Umfasst die Information über die voraussichtliche Fahrintention die Information über die voraussichtliche Trajektorie, so kann es den fahrzeugexternen Entitäten beispielsweise ermöglicht werden, die Trajektorien zu nutzen, um Trajektorien anderer Fahrzeugteilnehmer anzupassen oder Kollisionen zu vermeiden.

Ausführungsbeispiele schaffen ferner eine weitere Vorrichtung für ein Fahrzeug. Die weitere Vorrichtung umfasst eine Schnittstelle ausgebildet zum Erhalten von Information über eine voraussichtliche Fahrintention zumindest eines weiteren Fahrzeugs. Die weitere Vorrichtung umfasst ferner ein Kontrollmodul ausgebildet zum Bestimmen einer Fahrempfehlung, basierend auf der Information über die voraussichtliche Fahrintention des zumindest einen weiteren Fahrzeugs. In Ausführungsbeispielen kann die Fahrempfehlung ermöglichen, eine Trajektorie des Fahrzeugs anzupassen, beispielsweise um Gefährdungssituationen zu vermeiden oder um die Fahrt gleichmäßiger zu gestalten und Energie zu sparen.

In manchen Ausführungsbeispielen umfasst das zumindest eine weitere Fahrzeug eine automatische Distanzregelung. Das zumindest eine weitere Fahrzeug kann z.B. einen Autopiloten umfassen. Die Information über die Fahrintention kann beispielsweise auf der automatischen Distanzregelung oder dem Autopiloten basieren.

In einigen Ausführungsbeispielen umfasst das Fahrzeug eine automatische Distanzregelung. Das Fahrzeug kann einen Autopiloten umfassen. Das Kontrollmodul kann beispielsweise ausgebildet sein, basierend auf der Fahrempfehlung die automatische Distanzregelung oder den Autopiloten zu steuern.

In zumindest manchen Ausführungsbeispielen entspricht die Schnittstelle einer Schnittstelle für Fahrzeug-zu-Fahrzeug-Kommunikation. Über eine Fahrzeug-zu-Fahrzeug-Schnittstelle kann eine geringe Latenz erreicht werden oder beispielsweise lediglich Fahrintentionsinformationen empfangen werden, die für das Fahrzeug relevant sind.

In einigen Ausführungsbeispielen ist das Kontrollmodul ausgebildet, das Fahrzeug basierend auf der Fahrempfehlung zu steuern. Das Kontrollmodul kann beispielsweise ausgebildet sein, das Fahrzeug mittels Längs- und/oder Quersteuern basierend auf der Fahrempfehlung zu steuern. Durch das Steuern des Fahrzeugs kann das Kontrollmodul eine Trajektorie des Fahrzeugs anpassen, beispielsweise um Gefährdungssituationen zu vermeiden oder um die Fahrt gleichmäßiger zu gestalten und Energie zu sparen.

In zumindest manchen Ausführungsbeispielen ist das Kontrollmodul ausgebildet, um eine weitere Information über eine voraussichtliche Fahrintention des Fahrzeugs zu erhalten. Das Kontrollmodul kann ausgebildet sein, um für die Fahrempfehlung basierend auf der Information über die voraussichtliche Fahrintention des zumindest einen weiteren Fahrzeugs und basierend auf der weiteren Information über die voraussichtliche Fahrintention des Fahrzeugs Warninformation über eine mögliche Kollision bereitzustellen. Das Kontrollmodul kann ferner ausgebildet sein, um für die Fahrempfehlung basierend auf der Information über die voraussichtliche Fahrintention des zumindest einen weiteren Fahrzeugs und basierend auf der weiteren Information über die voraussichtliche Fahrintention des Fahrzeugs einem Fahrer des Fahrzeugs Lenkempfehlungen bereitzustellen. Die Warninformation und die Lenkempfehlungen können beispielsweise eine Fahrsicherheit zu erhöhen, indem es den Fahrer unterstützt.

In manchen Ausführungsbeispielen umfasst die Information über die voraussichtliche Fahrintention Information über eine voraussichtliche Trajektorie des zumindest einen weiteren Fahrzeugs. Die Information über die voraussichtliche Trajektorie kann beispielsweise Information über eine Mehrzahl von Zeit-Positions-Punkten umfassen. Das Kontrollmodul kann ausgebildet sein, die Fahrempfehlung basierend auf den Zeit-Positions-Punkten zu bestimmen, um beispielsweise das Fahrzeug basierend auf der Trajektorie des weiteren Fahrzeugs zu steuern.

In manchen Ausführungsbeispielen basieren die Zeitkomponenten und/oder die Positionskomponenten der Mehrzahl von Zeit-Positions-Punkten auf einem variablen zeitlichen oder örtlichen Abstand. Ein zeitlich oder örtlich variabler Abstand der Punkte kann eine höhere Genauigkeit der Informationen in kritischeren Situationen ermöglichen und es ermöglichen, ein übertragenes Datenvolumen in weniger kritischen Situationen zu reduzieren.

In einigen Ausführungsbeispielen kann die Information über die voraussichtliche Trajektorie auf zumindest einem Element der Gruppe von Information über einen Lenkwinkel, Information über eine Position des zumindest einen weiteren Fahrzeugs, Information über eine Geschwindigkeit des zumindest einen weiteren Fahrzeugs, Information über eine Beschleunigung des zumindest einen weiteren Fahrzeugs, Information über einen Fahrtrichtungsanzeiger, Information über einen Abstand anderer Fahrzeuge, Information über Fahrtrichtungsanzeiger anderer Fahrzeuge, Information über eine Lichtzeichenanlage, Information über ein automatisches Fahrkontrollsystem und Karteninformation basieren. Eine Nutzung solcher Informationsquellen kann eine Genauigkeit der Information über die voraussichtliche Trajektorie erhöhen.

In manchen Ausführungsbeispielen können die Zeitkomponenten und/oder die Positionskomponenten der Mehrzahl von Zeit-Positions-Punkten auf einer Fahrdynamik des zumindest einen weiteren Fahrzeugs basieren. Ein zeitlicher oder örtlicher Abstand der Punkte basierend auf der Fahrdynamik könnte eine höhere Genauigkeit der Informationen in kritischeren Fahrsituationen ermöglichen und es ermöglichen, ein übertragenes Datenvolumen in weniger kritischen Fahrsituationen zu reduzieren.

In einigen Ausführungsbeispielen entsprechen die Zeitkomponenten der Mehrzahl von Zeit-Positions-Punkten absoluten Zeitpunkten, Zeitpunkten relativ zu einem globalen Referenzzeitsystem und/oder Zeitpunkten relativ zu einem lokalen Referenzzeitsystem. Die Nutzung globaler oder lokaler Referenzzeiten kann eine zeitlich präzisere Nutzung der Punkte durch verschiedene Fahrzeuge ermöglichen.

In zumindest manchen Ausführungsbeispielen umfassen die Positionskomponenten der Mehrzahl von Zeit-Positions-Punkten zumindest ein Element der Gruppe von absolute Positionspunkte, Positionspunkte relativ zu einer Verkehrsinfrastruktur und Auswahl einer geometrischen Komponente der Verkehrsinfrastruktur. Die Verankerung der Positionskomponenten in einem Referenzsystem kann eine geographisch präzisere Nutzung der Punkte durch die fahrzeugexternen Entitäten ermöglichen.

In zumindest einigen Ausführungsbeispielen umfasst die Information über die voraussichtliche Trajektorie eine Zeitspanne von 0 bis 10 Sekunden, z.B., 3 Sekunden, 5 Sekunden, oder 7 Sekunden. Beispielsweise kann die Zeitspanne auch variabel, z.B. geschwindigkeitsabhängig, sein. Eine Beschränkung der Information über die voraussichtliche Trajektorie auf eine geringe Zeitspanne könnte eine Gesamtgenauigkeit der voraussichtlichen Trajektorie erhöhen und einen Berechnungsaufwand und Übertragungsaufwand reduzieren.

Ausführungsbeispiele schaffen ferner ein Kraftfahrzeug, welches die Vorrichtung und/oder die weitere Vorrichtung umfasst.

Ausführungsbeispiele schaffen ferner ein Verfahren für ein Fahrzeug. Das Verfahren umfasst Bestimmen von Information über eine voraussichtliche Trajektorie des Fahrzeugs. Das Verfahren umfasst ferner Bestimmen von Information über eine voraussichtliche Fahrintention des Fahrzeugs, basierend auf der Information über die voraussichtliche Trajektorie des Fahrzeugs. Das Verfahren umfasst ferner Bereitstellen der Information über die voraussichtliche Fahrintention für ein oder mehrere fahrzeugexterne Entitäten.

Ausführungsbeispiele schaffen ferner ein weiteres Verfahren für ein Fahrzeug. Das weitere Verfahren umfasst Erhalten von Information über eine voraussichtliche Fahrintention zumindest eines weiteren Fahrzeugs. Das weitere Verfahren umfasst ferner Bestimmen einer Fahrempfehlung, basierend auf der Information über die voraussichtliche Fahrintention des zumindest einen weiteren Fahrzeugs.

Ausführungsbeispiele schaffen ferner Programm mit einem Programmcode zum Durchführen zumindest eines der Verfahren wenn der Programmcode auf einem Computer, einem Prozessor, einem Kontrollmodul oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Blockdiagramm eines Ausführungsbeispiels einer Vorrichtung zum Bereitstellen einer Information über eine voraussichtliche Fahrintention;
- Fig. 2: zeigt beispielhafte Darstellungen von Informationen über voraussichtliche Fahrintentionen;
- Fig. 3: illustriert ein Blockdiagramm eines Ausführungsbeispiels einer Vorrichtung zum Bestimmen einer Fahrempfehlung;
- Fig. 4: zeigt eine beispielhafte Darstellung eines Zeit-Positions-Diagramms für eine beispielhafte Steuerung eines Fahrzeugs;
- Fig. 5: illustriert ein Flussdiagramm eines Ausführungsbeispiels eines Verfahrens zum Bereitstellen einer Information über eine voraussichtliche Fahrintention; und
- Fig. 6: illustriert ein Flussdiagramm eines Ausführungsbeispiels eines weiteren Verfahrens zum Bestimmen einer Fahrempfehlung.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Zukünftige Fahrerassistenzsysteme, wie z. B. eine verbundene automatische Distanzregelung (auch engl. Connected Adaptive Cruise Control, Connected ACC), Kolonnenstart aus dem Stillstand an einer Lichtzeichenanlage (Ampel), Einscherassistenten sowie Kreuzungsassistenten könnten einfacher und besser realisiert werden, wenn die Intention anderer Fahrzeuge bezüglich ihrer geplanten Trajektorien in der nahen Zukunft bekannt wäre. Zu einem gewissen Grad automatisch fahrende Fahrzeuge könnten beispielsweise ihre in der nahen Zukunft zu befahrende Trajektorie berechnen. In teilautomatisierten Systemen, wie z. B. einem ACC, liegt ebenfalls die prognostizierte in der nahen Zukunft zu befahrende Trajektorie vor. Ausführungsbeispiele umfassen ein Konzept zur Beschreibung der Fahrintention in eine nahen Zukunft, basierend auf geplanten Trajektorien und eine Kommunikation der Intention zu den übrigen Verkehrsteilnehmern, beispielsweise mithilfe von Funkkommunikation.

Ausführungsbeispiele könnten diese Trajektorien als Basis zur Bestimmung der Fahrintention in der nahen Zukunft dar nutzen. Dabei könnte die voraussichtliche Trajektorie mithilfe von Weg-Zeit-Punkten beschrieben sein. Für jeden einzelnen solcher Punkte könnten optional dazu die für diesen Punkt geplante Beschleunigung und Zielgeschwindigkeit (oder andere fahrzeugspezifische dynamische Parameter) umfasst sein. Durch der Mitteilung der geplanten (in der Zukunft liegenden) Weg-Zeit-Punkte-Trajektorien könnten die anderen Verkehrsteilnehmer ihre eigene geplante Trajektorie anpassen. Ein ACC-System könnte z.B. basierend auf den geplanten Weg-Zeit-Punkten des Vorderfahrzeugs regeln und nicht nur basierend auf dem gemessenen Abstand zum Vorderfahrzeug, wie es in konventionellen System häufig der Fall ist.

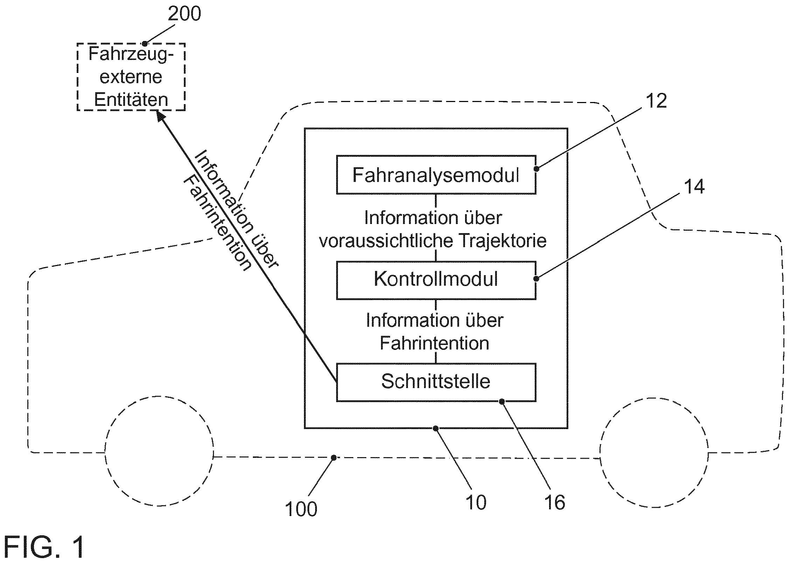

Fig. 1 illustriert ein Blockdiagramm eines Ausführungsbeispiels einer Vorrichtung 10 für ein Fahrzeug 100. Die Vorrichtung umfasst ein Fahranalysemodul 12 ausgebildet zum Bestimmen von Information über eine voraussichtliche Trajektorie des Fahrzeugs 100. Die Vorrichtung 10 umfasst ferner ein Kontrollmodul 14 ausgebildet zum Bestimmen von Information über eine voraussichtliche Fahrintention des Fahrzeugs 100, basierend auf der Information über die voraussichtliche Trajektorie des Fahrzeugs 100. Die Vorrichtung 10 umfasst ferner eine Schnittstelle 16 ausgebildet zum Bereitstellen der Information über die voraussichtliche Fahrintention für ein oder mehrere fahrzeugexterne Entitäten 200. Das Kontrollmodul 14 ist mit dem Fahranalysemodul 12 und der Schnittstelle 16 gekoppelt.

In manchen Ausführungsbeispielen könnte das Fahranalysemodul 12 die Information über die voraussichtliche Trajektorie beispielsweise basierend auf einem System für eine automatische Distanzregelung oder basierend auf einem Autopiloten bestimmen. Das Fahrzeug 100 könnte beispielsweise die automatische Distanzregelung oder den Autopiloten umfassen. In manchen Ausführungsbeispielen könnten die automatische Distanzregelung und/oder der Autopilot auch von der Vorrichtung 10 umfasst sein. Das Fahranalysemodul 12 könnte beispielsweise eine geplante Trajektorie, welche von dem System für die automatische Distanzregelung oder dem Autopiloten berechnet wurden, nutzen, um die Information über die voraussichtliche Trajektorie zu bestimmen.

Alternativ oder zusätzlich könnte das Fahranalysemodul 12 ausgebildet sein, um die Information über die voraussichtliche Trajektorie basierend auf zumindest einem Element der Gruppe von Information über einen Lenkwinkel, Information über eine Position des Fahrzeugs 100, Information über eine Geschwindigkeit des Fahrzeugs 100, Information über eine Beschleunigung des Fahrzeugs 100, Information über einen Fahrtrichtungsanzeiger, Information über einen Abstand anderer Fahrzeuge, Information über Fahrtrichtungsanzeiger anderer Fahrzeuge, Information über eine Lichtzeichenanlage, Information über ein automatisches Fahrkontrollsystem und Karteninformation zu bestimmen. Das Fahranalysemodul 12 könnte beispielsweise ausgebildet sein, Informationen über eine Informationsschnittstelle des Fahrzeugs zu erhalten, beispielsweise über einen Kontroll-Netzwerk-Bus (auch engl. Controller Area Network Bus, CAN Bus), etwa um die Information über den Lenkwinkel oder die Information über den Fahrtrichtungsanzeiger zu erhalten. Das Fahranalysemodul 12 könnte beispielsweise die Information über die voraussichtliche Trajektorie basierend auf Geschwindigkeits-, Beschleunigungs- und/oder Abbremsdaten bestimmen, welches es beispielsweise über den CAN-Bus erhalten hat. Das Fahranalysemodul 12 könnte ferner beispielsweise Daten von einem Sensormodul erhalten, beispielsweise Videodaten von einer Kamera für die Information über den Abstand anderer Fahrzeuge, die Information den Fahrtrichtungsanzeiger der anderen Fahrzeuge und/oder die Information über die Lichtzeichenanlage, oder beispielsweise Entfernungsdaten von einen Distanz-Messsensor für die Information über den Abstand der anderen Fahrzeuge, beispielsweise basierend auf einem Laufzeitverfahren. Das Fahranalysemodul 12 kann in manchen Ausführungsbeispielen ferner dazu ausgebildet sein, Rohdaten, beispielsweise Videodaten, zu analysieren, um die Informationen, beispielsweise über Mustererkennung, aus den Rohdaten zu extrahieren, beispielsweise Blinkzeichen von anderen Fahrzeugen oder Ampellicht aus Bilddaten. In einigen Ausführungsbeispielen könnte das Fahranalysemodul 12 ferner ausgebildet sein, die Informationen von fahrzeugexternen Quellen zu erhalten, beispielsweise Umschaltzeiten von einer Lichtzeichenanlage. Das automatische Fahrkontrollsystem könnte beispielsweise einem adaptiven Distanzregler, einem adaptiven Tempomaten oder einem Autopiloten entsprechen.

Das Fahranalysemodul 12 kann ferner ausgebildet sein, basierend auf den erhaltenen oder analysieren Informationen eine Wahrscheinlichkeitsanalyse und/oder einen Mustervergleich mit einer Sammlung von Verkehrsmustern durchzuführen, um die voraussichtliche Trajektorie zu bestimmen. Beispielsweise könnte das Fahranalysemodul 12 basierend auf einem Radwinkel, einer Geschwindigkeit und/oder einer Beschleunigung des Fahrzeugs die voraussichtliche Trajektorie extrapolieren, etwa unter Berücksichtigung der anderen Verkehrsteilnehmer anhand der Abstands- oder Videodaten. In einigen Ausführungsbeispielen könnte das Fahranalysemodul 12 ausgebildet sein, die voraussichtliche Trajektorie anhand von Ortsdaten oder Navigationsdaten zu bestimmen, etwa basierend auf einer voraussichtlichen Abbiegespur basierend auf einem Navigationsziel oder basierend auf einem voraussichtlichen Weg basierend auf einer gewählten Abbiegespur an einer Kreuzung.

In zumindest einigen Ausführungsbeispielen umfasst die Information über die voraussichtliche Trajektorie Informationen, welchen Weg das Fahrzeug in der unmittelbaren Zukunft voraussichtlich nehmen wird. Die Information über die voraussichtliche Trajektorie könnte beispielsweise Information über eine Mehrzahl von Zeit-Positions-Punkten umfassen, wobei ein Zeit-Positions-Punkt eine Zeitkomponente und eine Positionskomponente umfasst. In zumindest manchen Ausführungsbeispielen könnte die Information über die voraussichtliche Trajektorie eine Zeitspanne von 0 bis 10 Sekunden umfassen, beispielsweise eine Zeitspanne der nächsten oder auf einen Referenzzeitpunkt folgenden 1, 2, 3, 4, 5, 6, 7, 8, 9, 10, 12, 15, 16 oder 20 Sekunden, oder das Fahranalysemodul 12 könnte Zeit-Positions-Punkte für einen Zeitraum bereitstellen, für die ein Konfidenzintervall der Vorhersage über einem Schwellenwert ist.

In unterschiedlichen Fahrsituationen könnte die Information über die voraussichtliche Trajektorie dabei eine unterschiedliche Granularität an Informationen umfassen. Das Fahranalysemodul 12 könnte beispielsweise ausgebildet sein, um die Zeitkomponenten und/oder die Positionskomponenten der Mehrzahl von Zeit-Positions-Punkten basierend auf einem variablen zeitlichen oder örtlichen Abstand zu bestimmen, beispielsweise basierend auf einer Fahrdynamik des Fahrzeugs, basierend auf der Information über den Abstand der anderen Fahrzeuge oder basierend auf der Information über die Lichtzeichenanlage.

Die Zeit-Positionspunkte können in einigen Ausführungsbeispielen dabei absolut oder relativ definiert sein. Zeitkomponenten der Mehrzahl von Zeit-Positions-Punkten könnten beispielsweise absoluten Zeitpunkten, Zeitpunkten relativ zu einem globalen Referenzzeitsystem und/oder Zeitpunkten relativ zu einem lokalen Referenzzeitsystem entsprechen. Ein globales Referenzzeitsystem könnte Beispielsweise die Zeitinformation eines Globalen Satelliten-Navigationssystems oder die Zeit eines Funk-Zeitübertragungssystems darstellen, ein lokales Referenzzeitsystem könnte beispielsweise eine synchronisierte Zeit innerhalb eines lokalen Funknetzwerks darstellen. Die Positionskomponenten der Mehrzahl von Zeit-Positions-Punkten könnten zumindest ein Element der Gruppe von absolute Positionspunkte, Positionspunkte relativ zu einer Verkehrsinfrastruktur und Auswahl einer geometrischen Komponente der Verkehrsinfrastruktur umfassen. Absolute Positionspunkte könnten dabei beispielsweise auf einem Satellitennavigationssystem basieren, Positionspunkte relativ zu der Verkehrsinfrastruktur könnten beispielsweise eine Position auf einer Straße/Kreuzung angeben (Streckenmeter, Abstand von Mitte/Spur). Die Auswahl der geometrischen Komponente der Verkehrsinfrastruktur könnte beispielsweise einer Spur der Verkehrsinfrastruktur entsprechen. Ist eine Verkehrsinfrastruktur in geometrische Komponenten zerlegt (auch engl. Tiles), welche beispielsweise die Verkehrsinfrastruktur in Teile unterteilen (Fahrspuren, Streckenmeter, Abbiegespuren an Kreuzungen), so könnte eine Auswahl dieser möglicherweise mit einer variablen Granularität gewählten Komponenten eine Reduzierung eines Übertragungsvolumens und eine vereinfachte Analyse ermöglichen.

Bei einem Start aus dem Stand könnte zusätzlich der geplante Losfahr-/Startzeitpunkt in der Information über die voraussichtliche Trajektorie umfasst sein. Dieser könnte beispielsweise von der GNSS-Zeit (Global Navigation Satellite System) oder als relative Angabe von den Schaltzeiten einer Lichtzeichenanlage (LZA) abgeleitet werden.

Optional könnten weiterhin Informationen zum Fahrstreifen umfasst sein, beispielsweise den Fahrstreifen, auf dem sich das Fahrzeug, auf welche LZA sich die Informationen beziehen und/oder auf welche Fahrzeugposition in Bezug auf die für das Fahrzeug relevante Haltelinie der LZA sich bezogen wird.

Die Anzahl der Punkte der Trajektorie könnte statisch festgelegt sein (z.B. im Standard des Nachrichtenformats festgelegter Wert) oder durch einen Algorithmus bestimmte werden (z.B. bis zu einer im Standard des Nachrichtenformats festgelegten maximalen Anzahl, wobei auch eine minimale Anzahl festgelegt sein könnte). In einigen vorteilhaften Ausführungsbeispielen könnte die Anzahl der Weg-Zeit-Punkte zur Beschreibung einer Trajektorie mindesten 10 betragen.

Der zeitliche und/oder örtliche Abstand der Punkte der Trajektorie könnte ebenfalls statisch festgelegt sein (z. B. im Standard des Nachrichtenformats festgelegter Wert) oder durch einen Algorithmus bestimmte werden. In einigen vorteilhaften Ausführungsbeispielen könnten z.B. im Standard des Nachrichtenformats minimale und maximale Abstände festgelegt sein, zwischen denen die Trajektorienpunkte liegen dürfen. Die Abstände müssen in manchen Ausführungsbeispielen nicht äquidistant sein. In einigen vorteilhaften Ausführungsbeispielen könnte der Algorithmus zur Abstandsbestimmung die geplante Fahrdynamik (je größer die Dynamik ist, desto dichter liegen die Punkte) berücksichtigen. Die Trajektorien im Stillstand und nach dem Losfahren könnten auch nach dem gleichen Algorithmus vorhergesagt werden, wenn der Startpunkt zusätzlich als Punkt Null definiert wird.

Basierend auf der Information über die voraussichtliche Trajektorie bestimmt das Kontrollmodul 14 die Information über die voraussichtliche Fahrintention. Die Information über die voraussichtliche Fahrintention kann dabei beispielsweise die Information über die voraussichtliche Trajektorie umfassen, und/oder weitere Informationen, die über die voraussichtliche Trajektorie hinausgehen, beispielsweise eine voraussichtliche Spurwahl des Fahrzeugs 100, eine voraussichtliche Abbiegeabsicht, oder eine voraussichtliche Absicht, bei einer Autobahnauffahrt in den Verkehr einzuscheren. Das Kontrollmodul 14 könnte beispielsweise die Information über die Fahrintention ferner basierend auf den Ortsdaten bestimmen, beispielsweise um einen Kontext zu der voraussichtlichen Trajektorie zu erkennen. Beispielsweise könnte die Information über die Fahrintention ferner auf der Fahrdynamik des Fahrers des Fahrzeugs basieren, etwa ob dieser tendenziell riskante Fahrmanöver durchführt. Das Kontrollmodul 14 könnte beispielsweise ausgebildet sein, die Information über die voraussichtliche Fahrintention ferner basierend auf der Fahrdynamik des Fahrers zu bestimmen, beispielsweise basierend auf vergangenen Geschwindigkeits-, Beschleunigungs- und Abbremsdaten. In zumindest einigen Ausführungsbeispielen könnte das Kontrollmodul 14 ausgebildet sein, die Information über die Fahrintention basierend auf einem Persönlichkeitsprofil des Fahrers zu bestimmen, beispielsweise basierend auf einer Sammlung von vorhergehenden Reaktion auf Fahrsituationen. Das Kontrollmodul 14 ist in manchen Ausführungsbeispielen ausgebildet, die Information über die voraussichtliche Fahrintention über die Schnittstelle 16 bereitzustellen.

Die Schnittstelle 16 könnte beispielsweise einer Schnittstelle für Fahrzeug-zu-Fahrzeug-Kommunikation entsprechen. Die Schnittstelle 16 könnte beispielsweise ausgebildet sein, die Information über die voraussichtliche Fahrintention weiteren Fahrzeugen in einer Umgebung um das Fahrzeug 100 bereitzustellen. Die ein oder mehreren fahrzeugexternen Entitäten 200 können beispielsweise weiteren Fahrzeugen, Entitäten, welche die Informationen über die voraussichtlichen Fahrintentionen von mehreren Fahrzeugen sammeln, aggregieren und/oder weiterleiten, oder Analyseentitäten, die die Informationen über die voraussichtlichen Fahrintentionen von mehreren Fahrzeugen statistisch analysieren, entsprechen. Die ein oder mehreren fahrzeugexternen Entitäten 200 könnten beispielsweise einem Fahrzeug 200a entsprechen oder dieses umfassen.

Die Information über die voraussichtliche Fahrintention könnte beispielsweise die Information über die voraussichtliche Trajektorie umfassen, beispielsweise nach einer der folgenden Definitionen. Beispielsweise könnten die Datenpakete der Information über die voraussichtliche Trajektorie auf dem Standard des European Telecommunications Standards Institute (ETSI) TS 102 894-2 V1.2.1 basieren (Definition des Pfadverlaufs). Ein solches Nachrichtenformat könnte beispielsweise Kopfdaten, eine Basis-Datenstruktur und eine Datenstruktur für die voraussichtliche Trajektorie umfassen. Die Kopfdaten (auch engl. Header), etwa ein ITS (Intelligent Transport System, Intelligentes Transportsystem)-PDU (Physical Data Unit, Physikalische Dateneinheit)-Header, könnten beispielsweise eine Version des verwendeten Protokolls (auch engl. protocolVersion), eine Identifikation/Nummerierung der Nachricht (auch engl. messageId) und eine Identifikation des Kommunizierenden (auch engl. stationId) umfassen. Die Basis-Datenstruktur könnte beispielsweise eine relative Zeitangabe zur Zeit des Erstellens der Nachricht (auch engl. generation-DeltaTime), einen Typ des Kommunizierenden (auch engl. stationType), also etwa ob es ein Fahrzeug ist, eine Position (position) und eine Höhe (altitude) des Kommunizierenden und optional beispielsweise auch einen Automatisierungsgrad (automationLevel) des Kommunizierenden umfasssen. Die Datenstruktur für die voraussichtliche Trajektorie kann beispielsweise aus einer Datenstruktur bestehen (etwa einem Datenfeld mit 24 Einträgen [0..23], welches für jeden Eintrag eine veränderte Position (pathDeltaPosition), eine veränderte Zeit (pathDeltaTime), eine Beschleunigung in Längs oder Querrichtung (longitudinalAcceleration und lateralAccelleration) oder optional auch eine Fahrspur (auch engl. lane) umfasst. Die Datenstruktur für die voraussichtliche Trajektorie kann beispielsweise der Information über die voraussichtliche Trajektorie entsprechen oder diese umfassen. Manche Elemente, beispielswiese die Position, die Höhe, oder die Beschleunigung können beispielsweise auch noch Indikatoren für eine Genauigkeit der Informationen umfassen.

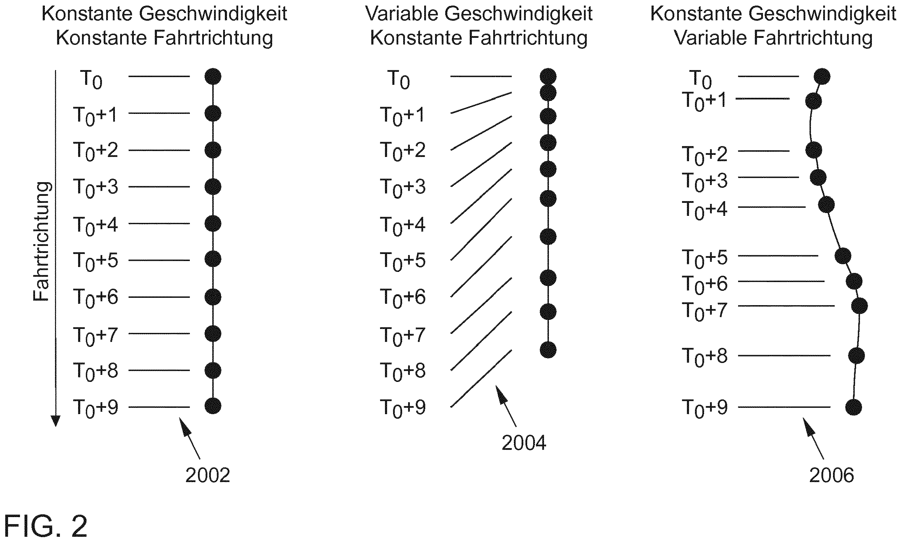

Fig. 2 zeigt beispielhafte Darstellungen von Informationen über voraussichtliche Fahrintentionen, welche Informationen über die zukünftigen Trajektorien umfassen. 2002 zeigt eine beispielhafte Darstellung von Information über eine Fahrintention bei konstanter Geschwindigkeit und konstanter Fahrtrichtung. Die Zeit-Positions-Punkte zu den Zeiten *T*₀ ... *T*₀₊₉ sind zeitlich wie örtlich äquidistant. 2004 zeigt eine weitere beispielhafte Darstellung von Information über eine Fahrintention bei variabler Geschwindigkeit und konstanter Fahrtrichtung. Dabei sind die (beispielhaften) Zeit-Positions-Punkte zu den Zeiten *T*₀ ... *T*₀₊₉ zeitlich äquidistant, aber örtlich variabel. 2006 zeigt ebenfalls eine weitere beispielhafte von Information über eine Fahrintention bei konstanter Geschwindigkeit und variabler Fahrtrichtung. Dabei sind die (beispielhaften) Zeit-Positions-Punkte zu den Zeiten *T*₀ ... *T*₀₊₉ zeitlich und örtlich variabel.

In Ausführungsbeispielen kann das Fahranalysemodul 12 und/oder das Kontrollmodul 14 einem beliebigen Controller oder Prozessor oder einer programmierbaren Hardwarekomponente entsprechen. Beispielsweise kann das Fahranalysemodul 12 und/oder das Kontrollmodul 14 auch als Software realisiert sein, die für eine entsprechende Hardwarekomponente programmiert ist. Insofern kann das Fahranalysemodul 12 und/oder das Kontrollmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Fahranalysemoduls 12 und/oder des Kontrollmoduls 14 denkbar.

Die Schnittstelle 16 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten.

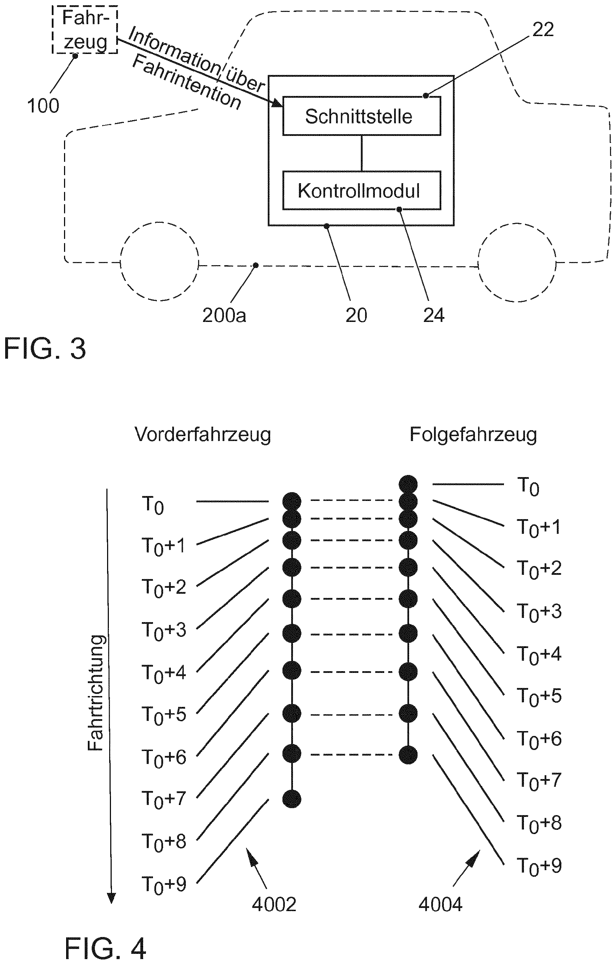

In zumindest manchen Ausführungsbeispielen könnte das Fahrzeug 100, sowie ein Fahrzeug 200a von Fig. 3, beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

Fig. 3 illustriert ein Blockdiagramm eines Ausführungsbeispiels einer Vorrichtung 20 für ein Fahrzeug 200a. Die Vorrichtung 20 umfasst eine Schnittstelle 22 ausgebildet zum Erhalten von Information über eine voraussichtliche Fahrintention zumindest eines weiteren Fahrzeugs 100. Die Vorrichtung 20 umfasst ferner ein Kontrollmodul 24 ausgebildet zum Bestimmen einer Fahrempfehlung, basierend auf der Information über die voraussichtliche Fahrintention des zumindest einen weiteren Fahrzeugs 100. Die Schnittstelle 22 ist mit dem Kontrollmodul 24 gekoppelt.

In zumindest manchen Ausführungsbeispielen könnte die Schnittstelle 22 einer Schnittstelle für Fahrzeug-zu-Fahrzeug-Kommunikation entsprechen. Die Schnittstelle 22 könnte beispielsweise ausgebildet sein, die Information über die Fahrintention direkt von dem zumindest einen weiteren Fahrzeug zu empfangen, beispielsweise über Fahrzeug-zu-Fahrzeug-Kommunikation. Alternativ oder zusätzlich könnte die Schnittstelle 22 ausgebildet sein, die Information über die Fahrintention von einer Entität, welche die Informationen über die voraussichtlichen Fahrintentionen von mehreren Fahrzeugen sammelt, aggregiert und/oder weiterleitet, zu empfangen, beispielsweise aggregiert über mehrere Fahrzeuge, beispielsweise über Fahrzeug-zu-Infrastruktur-Kommunikation oder über ein Mobilfunknetzwerk.

In manchen Ausführungsbeispielen könnte das Kontrollmodul 24 ausgebildet sein, um eine weitere Information über eine voraussichtliche Fahrintention des Fahrzeugs 200a zu erhalten. Beispielsweise könnte das Fahrzeug 200a ferner die Vorrichtung 10 umfassen. Das Kontrollmodul 14 könnte ausgebildet sein, die weitere Information über die voraussichtliche Fahrintention des Fahrzeugs 200a der Vorrichtung 20 bereitzustellen. Die weitere Information über eine voraussichtliche Fahrintention des Fahrzeugs 200a könnte beispielsweise Information über eine voraussichtliche Trajektorie des Fahrzeugs 200a umfassen.

Das Kontrollmodul 24 könnte beispielsweise ausgebildet sein, zum Bestimmen der Fahrempfehlung die voraussichtliche Trajektorie des Fahrzeugs 200a mit der voraussichtlichen Fahrintention des zumindest einen weiteren Fahrzeugs 100 zu vergleichen und die Fahrempfehlung so zu bestimmen, dass eine Kollision vermieden oder ein gleichmäßiger Verkehrsfluss ermöglicht wird. Das Kontrollmodul könnte alternativ oder zusätzlich die voraussichtliche Fahrintention des zumindest einen weiteren Fahrzeugs 100 mit der aktuellen Position, Fahrtrichtung, Geschwindigkeit und/oder Beschleunigung des Fahrzeugs 200a zu vergleichen, beispielsweise um eine Kollision des Fahrzeugs mit der voraussichtlichen Trajektorie des zumindest einen weiteren Fahrzeugs zu erkennen, beispielsweise durch Extrapolation einer Trajektorie des Fahrzeugs 200a und des zumindest einen weiteren Fahrzeugs 100. Das Kontrollmodul 24 könnte ferner ausgebildet sein, einen möglichen Zeitpunkt für ein Überhol-, Einscher- oder Abbiegemanöver zu bestimmen, basierend auf der Information über die voraussichtliche Fahrintention des zumindest einen weiteren Fahrzeugs, beispielsweise ferner basierend auf der Position, Fahrtrichtung, Geschwindigkeit und/oder Beschleunigung des Fahrzeugs 200a.

Das Kontrollmodul 24 könnte beispielsweise ausgebildet sein, um für die Fahrempfehlung basierend auf der Information über die voraussichtliche Fahrintention des zumindest einen weiteren Fahrzeugs 100 und basierend auf der weiteren Information über die voraussichtliche Fahrintention des Fahrzeugs 200a Warninformation über eine mögliche Kollision bereitzustellen. Beispielsweise könnte das Kontrollmodul 24 ausgebildet sein, über eine Anzeigeeinrichtung, beispielsweise eine Anzeigeeinrichtung vom Fahrer aus gesehen hinter dem Lenkrad oder über ein Über-Kopf-Anzeigegerät (auch engl. Head-Up-Display) die Warninformation darzustellen, beispielsweise um einen Fahrer über eine mögliche Kollisionsgefahr zu informieren.

In einigen Ausführungsbeispielen könnte das Kontrollmodul 24 ausgebildet sein, um für die Fahrempfehlung basierend auf der Information über die voraussichtliche Fahrintention des zumindest einen weiteren Fahrzeugs 100 und basierend auf der weiteren Information über die voraussichtliche Fahrintention des Fahrzeugs 200a einem Fahrer des Fahrzeugs 200a Lenkempfehlungen bereitzustellen. Beispielsweise könnte das Kontrollmodul 24 ausgebildet sein, eine Überlagerung der voraussichtlichen Trajektorien von Fahrzeugen in einer Umgebung des Fahrzeugs 200a darzustellen, mit einer vorgeschlagenen Trajektorie für das Fahrzeug 200a. Alternativ oder zusätzlich könnte das Kontrollmodul 24 ausgebildet sein, über ein Head-Up-Display Spurwechselempfehlungen und/oder Beschleunigungs- oder Bremsempfehlungen bereitzustellen.

In einigen Ausführungsbeispielen könnte das Fahrzeug 200a eine automatische Distanzregelung und/oder einen Autopiloten umfassen. Beispielsweise könnte die Vorrichtung 20 die automatische Distanzregelung und/oder den Autopiloten umfassen, oder das Kontrollmodul 24 könnte ausgebildet sein, die automatische Distanzregelung und/oder den Autopiloten zu steuern oder zu beeinflussen. In manchen Ausführungsbeispielen könnte das Kontrollmodul 24 ausgebildet sein, um das Fahrzeug 200a basierend auf der Fahrempfehlung zu steuern, beispielsweise mittels Längs- und/oder Quersteuern basierend auf der Fahrempfehlung. In zumindest manchen Ausführungsbeispielen könnte das Kontrollmodul 24 ausgebildet sein, um das Fahrzeug nur zu Steuern, wenn der Fahrer des Fahrzeugs nicht eingreift. Das Kontrollmodul 24 könnte beispielsweise ausgebildet sein, einen Abstand vorherfahrenden Autos zu halten oder anzupassen, Ausweichmanöver durchzuführen, einen Einschervorgang durchzuführen, oder einen Überholvorgang durchzuführen, basierend auf der Fahrempfehlung. In manchen Ausführungsbeispielen könnten Systeme zur Längs- und Querregelung der Fahrzeuge bei der Regelung des Abstandes zu anderen Fahrzeugen auf die Weg-Zeit-Punkte der Intentionsnachrichten beziehen, die von den anderen Fahrzeugen gesendet werden, und nicht auf die bemessenen Abstand zu den Vorderfahrzeug, wie bei normalen ACC Systemen üblich.

Fig. 4 zeigt eine beispielhafte Darstellung eines Zeit-Positions-Diagramms für eine beispielhafte Steuerung eines Fahrzeugs anhand der Information über die Fahrintention eines vorherfahrenden Fahrzeugs (Kolonnenfahrt). Das Vorderfahrzeug 4002 ist dabei dem Folgefahrzeug 4004 in Fahrtrichtung für Zeit-Positionspunkte *T*₀ ... *T*₀₊₉ jeweils voraus, wobei sich der örtliche Abstand über die Zeit auf einen Sollwert regelt, beispielsweise nach einem Kolonnenstart. Das Folgefahrzeug 4004, welches beispielsweise die Vorrichtung 20 umfasst, bezieht sich bei der Berechnung seiner Trajektorie bzw. Steuerung auf die Information über die voraussichtliche Fahrintention des Vorderfahrzeugs 4002, welches beispielsweise die Vorrichtung 10 umfasst. Dabei könnte die Vorrichtung 20 ausgebildet sein, das Folgefahrzeug basierend auf der Information über die Fahrintention zu steuern, und nicht basierend auf einer vom Fahrzeug 4004 gemessenen Distanz zum Vorderfahrzeug 4002.

In zumindest manchen Ausführungsbeispielen könnte das zumindest eine weitere Fahrzeug 100 eine automatische Distanzregelung und/oder einen Autopiloten umfassen, und die Information über die Fahrintention könnte beispielsweise auf der automatischen Distanzregelung oder dem Autopiloten basieren.

In zumindest manchen Ausführungsbeispielen könnte die Information über die voraussichtliche Fahrintention Information über eine voraussichtliche Trajektorie des zumindest einen weiteren Fahrzeugs umfasst, und wobei die Information über die voraussichtliche Trajektorie Information über eine Mehrzahl von Zeit-Positions-Punkten umfassen. Ein Zeit-Positions-Punkt könnte eine Zeitkomponente und eine Positionskomponente umfassen. Die Zeitkomponenten und/oder die Positionskomponenten der Mehrzahl von Zeit-Positions-Punkten könnten auf einem variablen zeitlichen oder örtlichen Abstand basieren. Die Information über die voraussichtliche Trajektorie könnte beispielsweise auf zumindest einem Element der Gruppe von Information über einen Lenkwinkel, Information über eine Position des zumindest einen weiteren Fahrzeugs 100, Information über eine Geschwindigkeit des zumindest einen weiteren Fahrzeugs 100, Information über eine Beschleunigung des zumindest einen weiteren Fahrzeugs 100, Information über einen Fahrtrichtungsanzeiger, Information über einen Abstand anderer Fahrzeuge, Information über Fahrtrichtungsanzeiger anderer Fahrzeuge, Information über eine Lichtzeichenanlage, Information über ein automatisches Fahrkontrollsystem und Karteninformation basieren. Die Zeitkomponenten und/oder die Positionskomponenten der Mehrzahl von Zeit-Positions-Punkten könnten auf einer Fahrdynamik des zumindest einen weiteren Fahrzeugs 100 basieren. Die Zeitpunkte der Mehrzahl von Zeit-Positions-Punkten könnten absoluten Zeitpunkten, Zeitpunkten relativ zu einem globalen Referenzzeitsystem und/oder Zeitpunkten relativ zu einem lokalen Referenzzeitsystem entsprechen. Die Positionskomponenten der Mehrzahl von Zeit-Positions-Punkten könnten zumindest ein Element der Gruppe von absolute Positionspunkte, Positionspunkte relativ zu einer Verkehrsinfrastruktur und Auswahl einer geometrischen Komponente der Verkehrsinfrastruktur umfassen. Die Information über die voraussichtliche Trajektorie eine Zeitspanne von 0 bis 10 Sekunden umfassen.

Die zumindest eine Schnittstelle 22 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten.

In Ausführungsbeispielen kann das Kontrollmodul 24 einem beliebigen Controller oder Prozessor oder einer programmierbaren Hardwarekomponente entsprechen. Beispielsweise kann das Kontrollmodul 24 auch als Software realisiert sein, die für eine entsprechende Hardwarekomponente programmiert ist. Insofern kann das Kontrollmodul 24 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 24 denkbar.

Mehr Details und Aspekte der Vorrichtung 20 (z.B. Information über die voraussichtliche Fahrintention, Fahrzeug 100, Information über die voraussichtliche Trajektorie, Vorrichtung 10, Kontrollmodul 14) werden in Verbindung mit dem Konzept oder Beispielen genannt, die vorher (z.B. Fig. 1) beschrieben wurden. Die Vorrichtung 20 kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

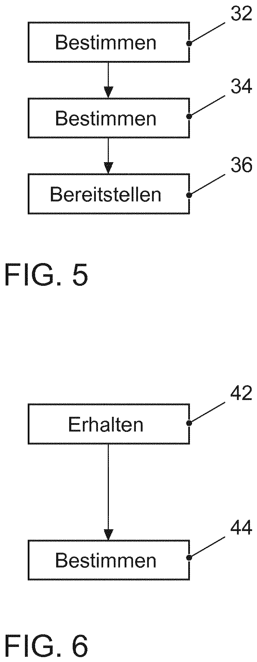

Fig. 5 illustriert ein Flussdiagramm eines Ausführungsbeispiels eines Verfahrens für ein Fahrzeug. Das Verfahren umfasst Bestimmen 32 von Information über eine voraussichtliche Trajektorie des Fahrzeugs. Das Verfahren umfasst ferner Bestimmen 34 von Information über eine voraussichtliche Fahrintention des Fahrzeugs, basierend auf der Information über die voraussichtliche Trajektorie des Fahrzeugs. Das Verfahren umfasst ferner Bereitstellen 36 der Information über die voraussichtliche Fahrintention für ein oder mehrere fahrzeugexterne Entitäten.

Fig. 6 illustriert ein Flussdiagramm eines Ausführungsbeispiels eines weiteren Verfahrens für ein Fahrzeug. Das weitere Verfahren umfasst Erhalten 42 von Information über eine voraussichtliche Fahrintention zumindest einen weiteren Fahrzeugs. Das weitere Verfahren umfasst ferner Bestimmen 44 einer Fahrempfehlung, basierend auf der Information über die voraussichtliche Fahrintention des zumindest einen weiteren Fahrzeugs.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung
- 12: Fahranalysemodul
- 14: Kontrollmodul
- 16: Schnittstelle
- 20: Vorrichtung
- 22: Schnittstelle
- 24: Kontrollmodul
- 32: Bestimmen
- 34: Bestimmen
- 36: Bereitstellen
- 42: Erhalten
- 44: Bestimmen
- 100: Fahrzeug
- 200: Ein oder mehrere fahrzeugexterne Entitäten
- 200a: Fahrzeug
- 2002: Fahrintention bei konstanter Geschwindigkeit und konstanter Fahrtrichtung
- 2004: Fahrintention bei variabler Geschwindigkeit und konstanter Fahrtrichtung
- 2006: Fahrintention bei konstanter Geschwindigkeit und variabler Fahrtrichtung
- 4002: Vorderfahrzeug
- 4004: Folgefahrzeug

## Patentansprüche

1. Vorrichtung (10) für ein Fahrzeug (100), umfassend
ein Fahranalysemodul (12) ausgebildet zum Bestimmen einer voraussichtlichen Trajektorie des Fahrzeugs (100),
wobei die voraussichtliche Trajektorie eine Mehrzahl von Zeit-Positions-Punkten umfasst, wobei ein Zeit-Positions-Punkt eine Zeitkomponente und eine Positionskomponente umfasst,
wobei das Fahranalysemodul (12) ausgebildet ist, um die Zeitkomponenten und/oder die Positionskomponenten der Mehrzahl von Zeit-Positions-Punkten basierend auf einem variablen zeitlichen oder örtlichen Abstand zu bestimmen,
ein Kontrollmodul (14) ausgebildet zum Bestimmen von Information über eine voraussichtliche Fahrintention des Fahrzeugs (100), basierend auf der voraussichtlichen Trajektorie des Fahrzeugs (100), wobei die Information über die voraussichtliche Fahrintention die voraussichtliche Trajektorie umfasst, und
eine Schnittstelle (16) ausgebildet zum Bereitstellen der Information über die voraussichtliche Fahrintention für ein oder mehrere fahrzeugexterne Entitäten (200).

2. Vorrichtung (10) gemäß Anspruch 1,
wobei die voraussichtliche Trajektorie eine Zeitspanne von 0 bis 10 Sekunden umfasst, und/oder wobei die Schnittstelle (16) einer Schnittstelle für Fahrzeug-zu-Fahrzeug-Kommunikation entspricht,
und/oder wobei die fahrzeugexternen Entitäten (200) weiteren Fahrzeugen entsprechen.

3. Vorrichtung (10) gemäß einem der vorhergehenden Ansprüche,
wobei das Fahranalysemodul (12) ausgebildet ist, um die voraussichtliche Trajektorie basierend auf zumindest einem Element der Gruppe von einem Lenkwinkel, einer Position des Fahrzeugs (100), einer Geschwindigkeit des Fahrzeugs (100), einer Beschleunigung des Fahrzeugs (100), Information über einen Fahrtrichtungsanzeiger, einem Abstand anderer Fahrzeuge, Information über Fahrtrichtungsanzeiger anderer Fahrzeuge, Information über eine Lichtzeichenanlage, Information über ein automatisches Fahrkontrollsystem und Karteninformation zu bestimmen.

4. Vorrichtung (10) gemäß einem der Ansprüche 1 bis 3,
wobei das Fahranalysemodul (12) ausgebildet ist, um die Zeitkomponenten und/oder die Positionskomponenten der Mehrzahl von Zeit-Positions-Punkten basierend auf einer Fahrdynamik des Fahrzeugs zu bestimmen,
und/oder wobei die Zeitkomponenten der Mehrzahl von Zeit-Positions-Punkten absoluten Zeitpunkten, Zeitpunkten relativ zu einem globalen Referenzzeitsystem und/oder Zeitpunkten relativ zu einem lokalen Referenzzeitsystem entsprechen, und/oder wobei die Positionskomponenten der Mehrzahl von Zeit-Positions-Punkten zumindest ein Element der Gruppe von absolute Positionspunkte, Positionspunkte relativ zu einer Verkehrsinfrastruktur und Auswahl einer geometrischen Komponente der Verkehrsinfrastruktur umfassen.

5. Vorrichtung (20) für ein Fahrzeug (200a), umfassend
eine Schnittstelle (22) ausgebildet zum Erhalten von Information über eine voraussichtliche Fahrintention zumindest eines weiteren Fahrzeugs (100),
wobei die Information über die voraussichtliche Fahrintention eine voraussichtliche Trajektorie des zumindest einen weiteren Fahrzeugs umfasst, und wobei die voraussichtliche Trajektorie eine Mehrzahl von Zeit-Positions-Punkten umfasst, wobei ein Zeit-Positions-Punkt eine Zeitkomponente und eine Positionskomponente umfasst, wobei die Zeitkomponenten und/oder die Positionskomponenten der Mehrzahl von Zeit-Positions-Punkten basierend auf einem variablen zeitlichen oder örtlichen Abstand bestimmt sind, und
ein Kontrollmodul (24) ausgebildet zum Bestimmen einer Fahrempfehlung, basierend auf der Information über die voraussichtliche Fahrintention des zumindest einen weiteren Fahrzeugs (100).

6. Vorrichtung (20) gemäß Anspruch 5, wobei die Schnittstelle (22) einer Schnittstelle für Fahrzeug-zu-Fahrzeug-Kommunikation entspricht.

7. Vorrichtung (20) gemäß einem der Ansprüche 5 oder 6, wobei das Kontrollmodul (24) ausgebildet ist, um das Fahrzeug (200a) basierend auf der Fahrempfehlung zu steuern.

8. Vorrichtung (20) gemäß Anspruch 7, wobei das Kontrollmodul (24) ausgebildet ist, um das Fahrzeug (200a) mittels Längs- und/oder Quersteuern basierend auf der Fahrempfehlung zu steuern.

9. Vorrichtung (20) gemäß einem der Ansprüche der Ansprüche 5 bis 8, wobei das Kontrollmodul (24) ausgebildet ist, um eine weitere Information über eine voraussichtliche Fahrintention des Fahrzeugs (200a) zu erhalten, und
wobei das Kontrollmodul (24) ausgebildet ist, um für die Fahrempfehlung basierend auf der Information über die voraussichtliche Fahrintention des zumindest einen weiteren Fahrzeugs (100) und basierend auf der weiteren Information über die voraussichtliche Fahrintention des Fahrzeugs (200a) Warninformation über eine mögliche Kollision bereitzustellen,
und/oder wobei das Kontrollmodul (24) ausgebildet ist, um für die Fahrempfehlung basierend auf der Information über die voraussichtliche Fahrintention des zumindest einen weiteren Fahrzeugs (100) und basierend auf der weiteren Information über die voraussichtliche Fahrintention des Fahrzeugs (200a) einem Fahrer des Fahrzeugs (200a) Lenkempfehlungen bereitzustellen.

10. Vorrichtung (20) gemäß einem der Ansprüche 5 bis 9,
wobei die voraussichtliche Trajektorie auf zumindest einem Element der Gruppe von einem Lenkwinkel, einer Position des zumindest einen weiteren Fahrzeugs (100), einer Geschwindigkeit des zumindest einen weiteren Fahrzeugs (100), einer Beschleunigung des zumindest einen weiteren Fahrzeugs (100), Information über einen Fahrtrichtungsanzeiger, einem Abstand anderer Fahrzeuge, Information über Fahrtrichtungsanzeiger anderer Fahrzeuge, Information über eine Lichtzeichenanlage, Information über ein automatisches Fahrkontrollsystem und Karteninformation basiert, und/oder wobei die Zeitkomponenten und/oder die Positionskomponenten der Mehrzahl von Zeit-Positions-Punkten auf einer Fahrdynamik des zumindest einen weiteren Fahrzeugs (100) basieren,
und/oder wobei die Zeitpunkte der Mehrzahl von Zeit-Positions-Punkten absoluten Zeitpunkten, Zeitpunkten relativ zu einem globalen Referenzzeitsystem und/oder Zeitpunkten relativ zu einem lokalen Referenzzeitsystem entsprechen,
und/oder wobei die Positionskomponenten der Mehrzahl von Zeit-Positions-Punkten zumindest ein Element der Gruppe von absolute Positionspunkte, Positionspunkte relativ zu einer Verkehrsinfrastruktur und Auswahl einer geometrischen Komponente der Verkehrsinfrastruktur umfassen,
und/oder wobei die voraussichtliche Trajektorie eine Zeitspanne von 0 bis 10 Sekunden umfasst.

11. Verfahren für ein Fahrzeug, umfassend
Bestimmen (32) von einer voraussichtlichen Trajektorie des Fahrzeugs,
wobei die voraussichtliche Trajektorie eine Mehrzahl von Zeit-Positions-Punkten umfasst, wobei ein Zeit-Positions-Punkt eine Zeitkomponente und eine Positionskomponente umfasst,
wobei die Zeitkomponenten und/oder die Positionskomponenten der Mehrzahl von Zeit-Positions-Punkten basierend auf einem variablen zeitlichen oder örtlichen Abstand bestimmt werden,
Bestimmen (34) von Information über eine voraussichtliche Fahrintention des Fahrzeugs, basierend auf der voraussichtlichen Trajektorie des Fahrzeugs, wobei die Information über die voraussichtliche Fahrintention die voraussichtliche Trajektorie umfasst, und
Bereitstellen (36) der Information über die voraussichtliche Fahrintention für ein oder mehrere fahrzeugexterne Entitäten.

12. Verfahren für ein Fahrzeug, umfassend
Erhalten (42) von Information über eine voraussichtliche Fahrintention zumindest eines weiteren Fahrzeugs,
wobei die Information über die voraussichtliche Fahrintention eine voraussichtliche Trajektorie des zumindest einen weiteren Fahrzeugs umfasst, und wobei die voraussichtliche Trajektorie eine Mehrzahl von Zeit-Positions-Punkten umfasst, wobei ein Zeit-Positions-Punkt eine Zeitkomponente und eine Positionskomponente umfasst,
wobei die Zeitkomponenten und/oder die Positionskomponenten der Mehrzahl von Zeit-Positions-Punkten basierend auf einem variablen zeitlichen oder örtlichen Abstand bestimmt sind,
Bestimmen (44) einer Fahrempfehlung, basierend auf der Information über die voraussichtliche Fahrintention des zumindest einen weiteren Fahrzeugs.

13. Programm mit einem Programmcode zum Durchführen zumindest eines der Verfahren nach Anspruch 11 oder 12 wenn der Programmcode auf einem Computer, einem Prozessor, einem Kontrollmodul oder einer programmierbaren Hardwarekomponente ausgeführt wird.

## Claims

1. Device (10) for a vehicle (100), comprising a driving analysis module (12) configured to determine an expected trajectory of the vehicle (100),
wherein the expected trajectory comprises a plurality of time-position points, wherein a time-position point comprises a time component and a position component, wherein the driving analysis module (12) is configured to determine the time components and/or the position components of the plurality of time-position points based on a variable temporal or spatial distance,
a control module (14) designed to determine information about an expected driving intention of the vehicle (100), based on the expected trajectory of the vehicle (100), wherein the information about the expected driving intention comprises the expected trajectory, and
an interface (16) configured to provide the information about the expected driving intention for one or multiple vehicle-external entities (200).

2. Device (10) according to Claim 1,
wherein the expected trajectory comprises a time span from 0 to 10 seconds,
and/or wherein the interface (16) corresponds to an interface for vehicle-to-vehicle communication,
and/or wherein the vehicle-external entities (200) correspond to additional vehicles.

3. Device (10) according to either of the preceding claims,
wherein the driving analysis module (12) is configured to determine the expected trajectory based on at least one element from the group including a steering angle, a position of the vehicle (100), a speed of the vehicle (100), an acceleration of the vehicle (100), information about a driving direction indicator, a distance of other vehicles, information about driving direction indicators of other vehicles, information about a traffic light system, information about an automatic driving control system, and map information.

4. Device (10) according to one Claims 1 to 3, wherein the driving analysis module (12) is configured to determine the time components and/or the position components of the plurality of time-position points based on driving dynamics of the vehicle,
and/or wherein the time components of the plurality of time-position points correspond to absolute time points, time points relative to a global reference time system, and/or time points relative to a local reference time system,
and/or wherein the position components of the plurality of time-position points comprise at least one element from the group including absolute position points, position points relative to a traffic infrastructure, and selection of a geometric component of the traffic infrastructure.

5. Device (20) for a vehicle (200a), comprising an interface (22) configured to receive information about an expected driving intention of at least one additional vehicle (100),
wherein the information about the expected driving intention comprises an expected trajectory of the at least one additional vehicle, and wherein the expected trajectory comprises a plurality of time-position points, wherein a time-position point comprises a time component and a position component,
wherein the time components and/or the position components of the plurality of time-position points are determined based on a variable temporal or spatial distance, and
a control module (24) configured to determine a driving recommendation, based on the information about the expected driving intention of the at least one additional vehicle (100).

6. Device (20) according to Claim 5, wherein the interface (22) corresponds to an interface for vehicle-to-vehicle communication.

7. Device (20) according to either of Claims 5 and 6, wherein the control module (24) is configured to control the vehicle (200a) based on the driving recommendation.

8. Device (20) according to Claim 7, wherein the control module (24) is configured to control the vehicle (200a) by means of longitudinal and/or lateral control based on the driving recommendation.

9. Device (20) according to one of Claims 5 to 8, wherein the control module (24) is configured to receive additional information about an expected driving intention of the vehicle (200a), and
wherein the control module (24) is configured to provide warning information about a possible collision for the driving recommendation, based on the information about the expected driving intention of the at least one additional vehicle (100), and based on the additional information about the expected driving intention of the vehicle (200a),
and/or wherein the control module (24) is configured to provide steering recommendations to a driver of the vehicle (200a) for the driving recommendation, based on the information about the expected driving intention of the at least one additional vehicle (100), and based on the additional information about the expected driving intention of the vehicle (200a).

10. Device (20) according to one of Claims 5 to 9, wherein the expected trajectory is based on at least one element from the group including a steering angle, a position of the at least one additional vehicle (100), a speed of the at least one additional vehicle (100), an acceleration of the at least one additional vehicle (100), information about a driving direction indicator, a distance of other vehicles, information about driving direction indicators of other vehicles, information about a traffic light system, information about an automatic driving control system, and map information,
and/or wherein the time components and/or the position components of the plurality of time-position points are based on driving dynamics of the at least one additional vehicle (100),
and/or wherein the time points of the plurality of time-position points correspond to absolute time points, time points relative to a global reference time system, and/or time points relative to a local reference time system, and/or wherein the position components of the plurality of time-position points comprise at least one element from the group including absolute position points, position points relative to a traffic infrastructure, and selection of a geometric component of the traffic infrastructure,
and/or wherein the expected trajectory comprises a time span from 0 to 10 seconds.

11. Method for a vehicle, comprising
determining (32) an expected trajectory of the vehicle, wherein the expected trajectory comprises a plurality of time-position points, wherein a time-position point comprises a time component and a position component, wherein the time components and/or the position components of the plurality of time-position points are determined based on a variable temporal or spatial distance,
determining (34) information about an expected driving intention of the vehicle, based on the expected trajectory of the vehicle, wherein the information about the expected driving intention comprises the expected trajectory, and
providing (36) the information about the expected driving intention for one or multiple vehicle-external entities.

12. Method for a vehicle, comprising
receiving (42) information about an expected driving intention of at least one additional vehicle,
wherein the information about the expected driving intention comprises an expected trajectory of the at least one additional vehicle, and wherein the expected trajectory comprises a plurality of time-position points, wherein a time-position point comprises a time component and a position component,
wherein the time components and/or the position components of the plurality of time-position points are determined based on a variable temporal or spatial distance, and
determining (44) a driving recommendation, based on the information about the expected driving intention of the at least one additional vehicle.

13. Program including program code for carrying out at least one of the methods according to Claim 11 or 12 when the program code is executed on a computer, a processor, a control module, or a programmable hardware component.

## Revendications

1. Dispositif (10) destiné à un véhicule (100), comprenant
un module d'analyse de conduite (12) réalisé pour déterminer une trajectoire probable du véhicule (100),
dans lequel la trajectoire probable comprend une pluralité de points temps/position, un point temps/position comprenant une composante de temps et une composante de position,
dans lequel le module d'analyse de conduite (12) est réalisé pour déterminer les composantes de temps et/ou les composantes de position de la pluralité de points temps/position sur la base d'une distance temporelle ou locale variable,
un module de contrôle (14) réalisé pour déterminer des informations concernant une intention de conduite probable du véhicule (100) sur la base de la trajectoire probable du véhicule (100), les informations concernant l'intention de conduite probable comprenant la trajectoire probable, et
une interface (16) réalisée pour fournir les informations concernant l'intention de conduite probable à une ou plusieurs entités externes au véhicule (200).

2. Dispositif (10) selon la revendication 1,
dans lequel la trajectoire probable comprend une période de temps de 0 à 10 secondes, et/ou dans lequel l'interface (16) correspond à une interface pour une communication de véhicule à véhicule,
et/ou dans lequel les entités externes au véhicule (200) correspondent à d'autres véhicules.

3. Dispositif (10) selon l'une quelconque des revendications précédentes,
dans lequel le module d'analyse de conduite (12) est réalisé pour déterminer la trajectoire probable sur la base d'au moins un élément du groupe composé d'un angle de braquage, d'une position du véhicule (100), d'une vitesse du véhicule (100), d'une accélération du véhicule (100), d'informations concernant un indicateur de direction, d'une distance d'autres véhicules, des informations concernant des indicateurs de direction d'autres véhicules, des informations concernant les feux de signalisation, des informations concernant un système de contrôle de conduite automatique et des informations cartographiques.

4. Dispositif (10) selon l'une quelconque des revendications 1 à 3,
dans lequel le module d'analyse de conduite (12) est réalisé pour déterminer les composantes de temps et/ou les composantes de position de la pluralité de points temps/position sur la base d'une dynamique de conduite du véhicule,
et/ou dans lequel les composantes de temps de la pluralité de points temps/position correspondent à des instants absolus, à des instants par rapport à un système horaire de référence global et/ou à des instants par rapport à un système horaire de référence local, et/ou dans lequel les composantes de position de la pluralité de points temps/position comprennent au moins un élément du groupe composé de points de position absolus, de points de position par rapport à une infrastructure de transport et d'une sélection d'une composante géométrique de l'infrastructure de transport.

5. Dispositif (20) pour un véhicule (200a), comprenant
une interface (22) réalisée pour obtenir des informations concernant une intention de conduite probable d'au moins un autre véhicule (100),
dans lequel les informations concernant l'intention de conduite probable comprennent une trajectoire probable dudit au moins un autre véhicule, et dans lequel la trajectoire probable comprend une pluralité de points temps/position, un point temps/position comprenant une composante de temps et une composante de position, dans lequel les composantes de temps et/ou les composantes de position de la pluralité de points temps/position sont déterminées sur la base d'une distance temporelle ou locale variable, et
un module de contrôle (24) réalisé pour déterminer une recommandation de conduite, sur la base des informations concernant l'intention de conduite probable dudit au moins un autre véhicule (100).

6. Dispositif (20) selon la revendication 5, dans lequel l'interface (22) correspond à une interface pour une communication de véhicule à véhicule.

7. Dispositif (20) selon l'une quelconque des revendications 5 ou 6, dans lequel le module de contrôle (24) est réalisé pour piloter le véhicule (200a) sur la base de la recommandation de conduite.

8. Dispositif (20) selon la revendication 7, dans lequel le module de contrôle (24) est réalisé pour piloter le véhicule (200a) au moyen d'un pilotage longitudinal et/ou transversal sur la base de la recommandation de conduite.

9. Dispositif (20) selon l'une quelconque des revendications 5 à 8, dans lequel le module de contrôle (24) est réalisé pour obtenir d'autres informations concernant une intention de conduite probable du véhicule (200a), et
dans lequel le module de contrôle (24) est réalisé pour fournir la recommandation de conduite sur la base des informations concernant l'intention de conduite probable dudit au moins un autre véhicule (100) et pour fournir sur la base des autres information concernant l'intention de conduite probable du véhicule (200a) des avertissements concernant une collision possible,
et/ou dans lequel le module de contrôle (24) est réalisé pour fournir pour la recommandation de conduite sur la base des informations concernant l'intention de conduite probable dudit au moins un autre véhicule (100) et sur la base des autres informations concernant l'intention de conduite probable du véhicule (200a) des recommandations de direction à un conducteur du véhicule (200a).

10. Dispositif (20) selon l'une quelconque des revendications 5 à 9,
dans lequel la trajectoire probable est basée sur au moins un élément du groupe composé d'un angle de braquage, d'une position dudit au moins un autre véhicule (100), d'une vitesse dudit au moins un autre véhicule (100), d'une accélération dudit au moins un autre véhicule (100), d'informations concernant un indicateur de direction, d'une distance d'autres véhicules, d'informations concernant des indicateurs de directions d'autres véhicules, d'informations concernant des feux de signalisation, d'informations concernant un système de contrôle de conduite automatique et d'informations cartographiques, et/ou dans lequel les composantes de temps et/ou les composantes de position de la pluralité de points temps/position sont basées sur une dynamique de conduite dudit au moins un autre véhicule (100),
et/ou dans lequel les instants de la pluralité de points temps/position correspondent à des instants absolus, des instants par rapport à un système horaire de référence global et/ou des instants par rapport à un système horaire de référence local,
et/ou dans lequel les composantes de position de la pluralité de points temps/position comprennent au moins un élément du groupe composé de points de position absolus, de points de position par rapport à une infrastructure de transport et d'une sélection d'une composante géométrique de l'infrastructure de transport,
et/ou dans lequel la trajectoire probable comprend une période de temps de 0 à 10 secondes.

11. Procédé destiné à un véhicule, comprenant les étapes consistant à
déterminer (32) une trajectoire probable du véhicule,
dans lequel la trajectoire probable comprend une pluralité de points temps/position, un point temps/position comprenant une composante de temps et une composante de position,
dans lequel les composantes de temps et/ou les composantes de position de la pluralité de points temps/position sont déterminées sur la base d'une distance temporelle ou locale variable,
déterminer (34) des informations concernant une intention de conduite probable du véhicule sur la base de la trajectoire probable du véhicule, les informations concernant l'intention de conduite probable comprenant la trajectoire probable, et
fournir (36) les informations concernant l'intention de conduite probable à une ou plusieurs entités externes au véhicule.

12. Procédé destiné à un véhicule, comprenant les étapes consistant à
obtenir (42) des informations concernant une intention de conduite probable d'au moins un autre véhicule,
dans lequel les informations concernant l'intention de conduite probable comprennent une trajectoire probable dudit au moins un autre véhicule, et dans lequel la trajectoire probable comprend une pluralité de points temps/position, un point temps/position comprenant une composante de temps et une composante de position,
dans lequel les composantes de temps et/ou les composantes de position de la pluralité de points temps/position sont déterminées sur la base d'une distance temporelle ou locale variable,
déterminer (44) une recommandation de conduite sur la base des informations concernant l'intention de conduite probable dudit au moins un autre véhicule.

13. Programme comprenant du code programme pour exécuter au moins l'un des procédés selon la revendication 11 ou 12 lorsque le code programme est exécuté sur un ordinateur, un processeur, un module de contrôle ou un composant matériel programmable.
